# EUROPEAN PATENT APPLICATION

(11) **EP 4 249 357 A1**
(43) Date of publication of application: **27.09.2023**
(21) Application number: 23164044.2
(22) Date of filing: 24.03.2023
(51) Int. Cl.: B62K 21/12

(54) **IMPROVED VEHICLE STEM AND METHODS THEREOF**

(30) Priority: 25.03.2022 US 202263269921 P
(71) Applicant: Fifth Axis, Inc., San Diego, CA 92111 (US)
(72) Inventor: Rosene, Leo, SAN DIEGO, 92111 (US); King, Will, SAN DIEGO, 92111 (US); Ferguson, Scout, SAN DIEGO, 92111 (US); Taylor, Chris, SAN DIEGO, 92111 (US); Grangetto, Steve, SAN DIEGO, 92111 (US); Lane, Adam, SAN DIEGO, 92111 (US)
(74) Representative: Eisenführ Speiser

(57) **Abstract**

A vehicle stem (100) configured to secure a handle bar to a vehicle frame is disclosed. The vehicle stem (100) includes: a body containing a first and second arm segment defining a vehicle frame hole (120); a handle bar clamp arm (115) positioned adjacent to the first and second arm segment, wherein a curvature of the handle bar clamp arm defines a handle bar hole (110) oriented perpendicular to the vehicle frame hole (120); wherein a first distal end of the first arm segment comprises a first set of vehicle frame clamp holes (140) and wherein a second distal end of the second arm segment comprises a second set of vehicle frame clamp holes (140); wherein a first distal end of the handle bar clamp arm (115) comprises a set of slotted fastener holes (130) that are separated by a gap from a set of threaded fastener holes (135) positioned on a second distal end of the handle bar clamp arm (115).

## Description

### CROSS REFERENCE TO RELATED APPLICATIONS

This application claims priority to U.S. Application No. 63/269,921, filed on March 25, 2022, which is incorporated by reference herein in.

### TECHNICAL FIELD

Aspects of the present disclosure relate generally to improved stems for vehicles such as bicycles and motorcycles, and, more specifically, to embodiments of vehicle stems with varying radii resulting in an open sprung state prior to installation.

### BACKGROUND

A vehicle stem is a component of a vehicle that connects one or more handle bars with the frame of a vehicle. In the context of a bicycle, the stem will connect the bicycle handle bar to the steerer tube (e.g., vehicle frame) of the bicycle fork. Different types of stems are known. For example, a quill stem is typically a stem that is inserted into a top fork of a steerer tube and held into place internally, in some cases via threads or bolts or an internal fastening mechanism. On the other hand, a threadless stem typically clamps on to the steerer tube of the bicycle fork.

Threadless stems are typically two piece clamps with bolts for clamping the stem onto the bicycle fork. With precision bicycles, an exact fit is often required for optimal performance. However, these two piece clamp designs, because of the number of bolts, typically add weight to the bicycle. For high performance cycling, a reduction in weight of even a few grams or an ounce can significantly impact bicycle performance. As such, there is a need to reduce the weight of components while maintaining a high level of performance and durability.

### SUMMARY OF THE DISCLOSURE

According to certain aspects of the disclosure, improved stems for vehicles such as bicycles and motorcycles are disclosed.

In one aspect, a vehicle stem configured to secure a handle bar to a frame of a vehicle is disclosed. The vehicle stem includes: a body of the vehicle stem containing a first and second arm segment defining a vehicle frame hole, wherein the first arm segment is positioned above the second arm segment; a handle bar clamp arm positioned adjacent to the first adjacent to the first and second arm segment, wherein a curvature of the handle bar clamp arm defines a handle bar hole and wherein the handle bar hole is oriented perpendicular to the vehicle frame hole; wherein a first distal end of the first arm segment comprises a first set of vehicle frame clamp holes and wherein a second distal end of the second arm segment comprises a second set of vehicle frame clamp holes; wherein a first distal end of the handle bar clamp arm comprises a set of slotted fastener holes that are separated by a gap from a set of threaded fastener holes positioned on a second distal end of the handle bar clamp arm.

In another aspect, a vehicle, including: a handle bar secured to a frame of the vehicle by a vehicle stem: wherein a portion of the frame traverses through a vehicle frame hole defined by a first and second arm segment of the vehicle stem; wherein the handle bar is positioned through a handle bar hole that is defined by a curvature of a handle bar clamp arm of the vehicle stem; wherein a first set of vehicle frame fasteners are fastened through a first set of vehicle frame clamp holes positioned on a first distal end of the first arm segment and wherein a second set of vehicle frame fasteners are fastened through a second set of vehicle frame clamp holes positioned on a second distal end of the second arm segment; wherein a set of handle bar clamp fasteners are fastened through: a set of slotted fastener holes positioned at a first distal end of the handle bar clamp arm and a set of threaded fastener holes positioned at a second distal end of the handle bar clamp arm.

In yet another aspect, a method of securing a handle bar to a frame of a vehicle, the method including: inserting a handle bar through a handle bar hole of the vehicle stem as defined by a curvature of a handle bar clamp arm; inserting a set of handle bar clamp fasteners through a set of slotted fastener holes positioned at a first distal end of the handle bar clamp arm and a set of threaded fastener holes positioned at a second distal end of the handle bar clamp arm; tightening the set of handle bar clamp fasteners until a diameter and radii of the handle bar hole is reduced to fit the handle bar; inserting a portion of the frame through a vehicle frame hole of the vehicle stem as defined by a first and second arm segment; inserting a first set of vehicle frame fasteners through a first set of vehicle frame clamp holes positioned on a first distal end of the first arm segment and a second set of vehicle frame fasteners through a second set of vehicle frame clamp holes positioned on a second distal end of the second arm segment; and tightening the first and second set of vehicle frame fasteners until a diameter and radii of the vehicle frame hole is reduced to fit the portion of the frame of the vehicle.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE DRAWINGS

The drawings below illustrate the disclosed embodiments, and together with the description, serve to explain the principles of the disclosed embodiments. There are many aspects and embodiments described herein. Those of ordinary skill in the art will readily recognize that the features of a particular aspect or embodiment may be used in conjunction with the features of any or all of the other aspects or embodiments described in this disclosure. In the drawings:
FIG. 1 depicts a top perspective view of an exemplary improved vehicle stem in an unclamped state, according to various aspects of the present disclosure.
FIG. 2 depicts a side view of an exemplary improved vehicle stem in an unclamped state, according to various aspects of the present disclosure.
FIG. 3 depicts a top view of an exemplary improved vehicle stem in an unclamped state, according to various aspects of the present disclosure.
FIG. 4 depicts a bottom view of an exemplary improved vehicle stem in an unclamped state, according to various aspects of the present disclosure.
FIG. 5 depicts a front view of an exemplary improved vehicle stem in an unclamped state, according to various aspects of the present disclosure.
FIG. 6 depicts a rear view of an exemplary improved vehicle stem in an unclamped state, according to various aspects of the present disclosure.
FIG. 7 depicts a bottom perspective view of an exemplary improved vehicle stem in an unclamped state, according to various aspects of the present disclosure.
FIGS. 8A-8B depict additional side views of exemplary improved vehicle stems in unclamped states including the varying radii, according to various aspects of the present disclosure.
FIGS. 9A-9B depict multiple views of an exemplary improved vehicle stem including the handle bar clamp slotted bolt holes, according to various aspects of the present disclosure.
FIGS. 10A-10C depict various views of the vehicle stem 100 in a clamped position or state, according to various aspects of the present disclosure.
FIGS. 11A-11B depict various views of the vehicle stem 100 in a clamped position or state with an exemplary handle bar, according to various aspects of the present disclosure.

### DETAILED DESCRIPTION OF THE EMBODIMENTS

Reference will now be made in detail to the exemplary embodiments of the present disclosure described below and illustrated in the accompanying drawings. Wherever possible, the same reference numbers will be used throughout the drawings to refer to same or like parts.

Both the foregoing general description and the following detailed description are exemplary and explanatory only and are not restrictive of the features, as claimed. As used herein, the terms "comprises," "comprising," or other variations thereof, are intended to cover a non-exclusive inclusion such that a process, method, article, or apparatus that comprises a list of elements does not include only those elements, but may include other elements not expressly listed or inherent to such a process, method, article, or apparatus. Additionally, the term "exemplary" is used herein in the sense of "example," rather than "ideal." It should be noted that all numeric values disclosed or claimed herein (including all disclosed values, limits, and ranges) may have a variation of +/- 10% (unless a different variation is specified) from the disclosed numeric value. Moreover, in the claims, values, limits, and/or ranges mean the value, limit, and/or range +/-10%.

Additional objects and advantages of the embodiments will be set forth in part in the description that follows, and in part will be obvious from the description, or may be learned by practice of the embodiments. It is to be understood that both the foregoing general description and the following detailed description are exemplary and explanatory only and are not restrictive of the claims.

A single component bicycle stem has previously been manufactured. However, such prior stems are difficult to install. For example, they require specialized tools to pry open the clamping arms in order to install or insert the handle bar. Errors or mistakes can result in damage to the bicycle fork, stem, handle bar, or other components. Further, damage caused by prying open the stem to install it may damage the stem, resulting in a poor fit with the bicycle fork or handle bar, and ultimately poor performance and rider or mechanic frustration. Because of the difficulty in installation, users often may even forego installing a single piece stem clamp entirely, and instead be forced to use heavier clamp stem designs with multiple pieces. Additionally, when clamped, the stems may further cause damage to or scratch the handle bar. Thus, there exists a need for an improved single-piece vehicle stem that is easy to install while providing an optimal fit with other vehicle components.

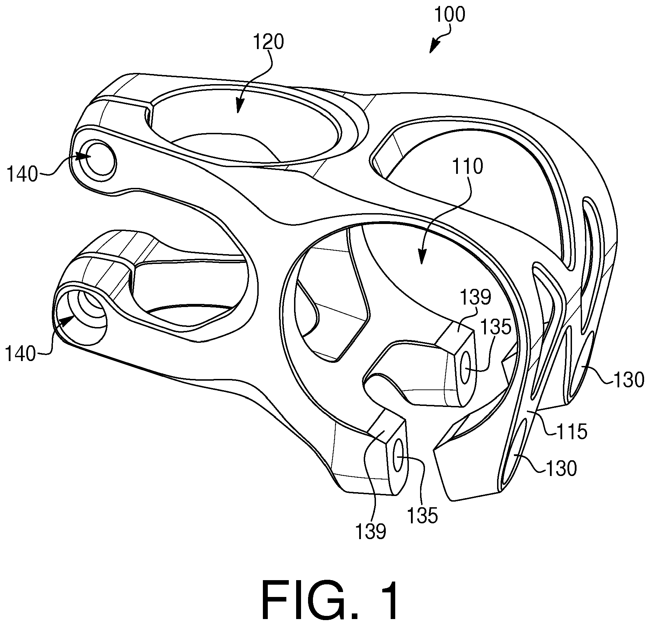

Referring now to FIG. 1, a top perspective view of a vehicle stem 100 in an unclamped state is presented according to an embodiment. The vehicle stem 100 may include a handle bar hole 110 of varying radii, a vehicle frame hole 120, a handle bar clamp arm 115, handle bar clamp slotted bolt holes 130, handle bar clamp threaded bolt holes 135, chamfers 139, and vehicle frame clamp holes 140. While a single or continuous handle bar clamp arm 115 is disclosed in FIG. 1, multiple handle bar clamp arms may also be implemented according to aspects of this disclosure.

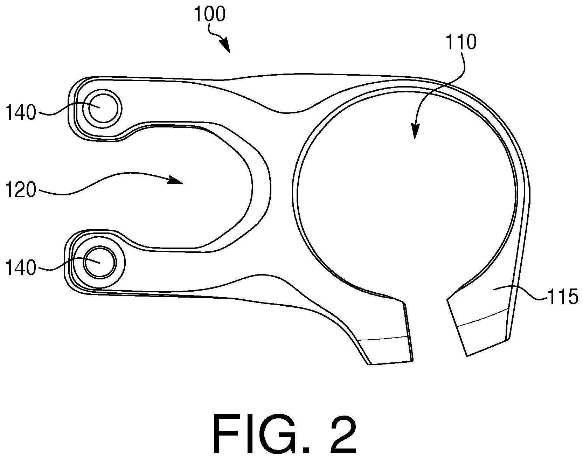

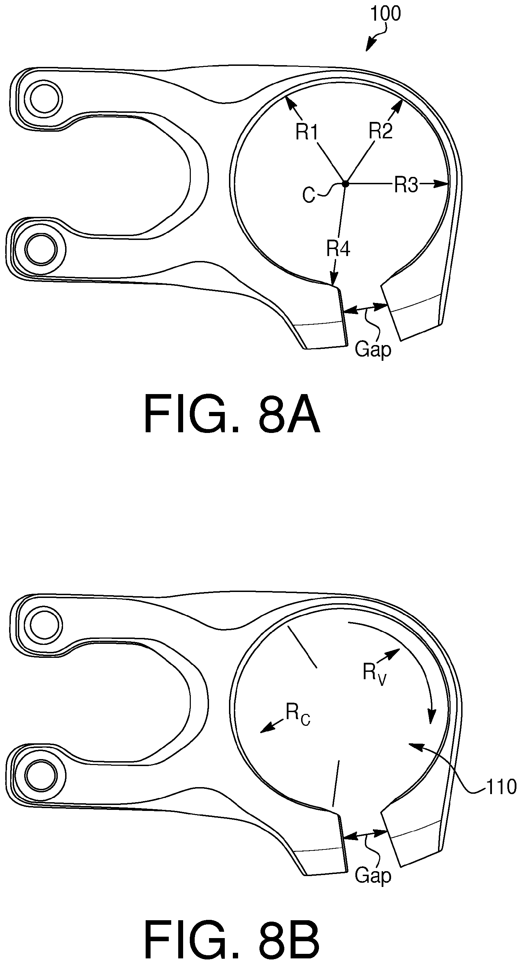

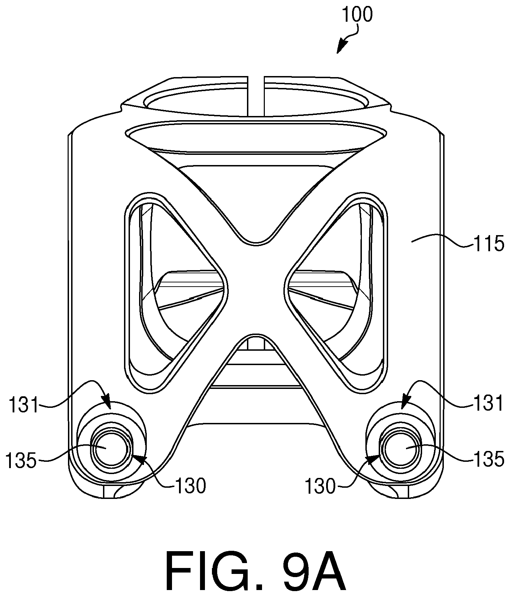

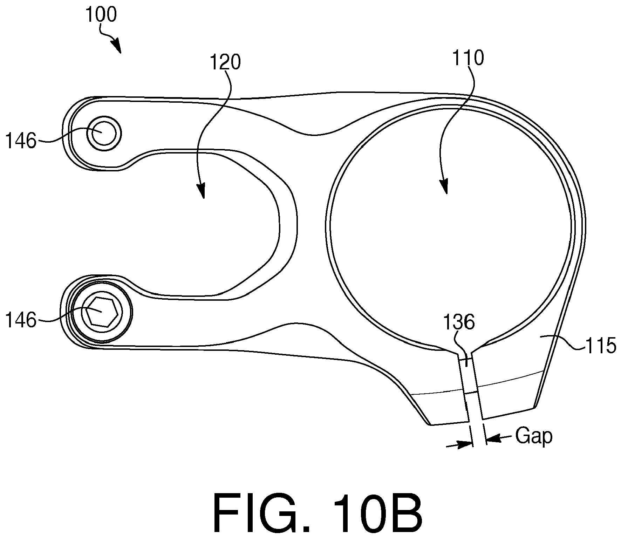

Further, the vehicle stem 100 is made of a flexible material or metal sufficient to accommodate clamping on to a handle bar diameter such that there are no gaps at the stem to handle bar interface when the bolts are tightened down. Additionally, the varying radii of the handle bar hole 110, defined by handle bar clamp arm 115, causes the handle bar hole 110 to expand to a larger diameter in an unclamped state, such that a larger gap is created sufficient for a user to easily place the handle bar into the handle bar hole 110 without the need for specialized tools as shown in FIG. 1 above and as described further below. Aspects of the varying radii of the handle bar hole 110 are described further below with respect to FIGS. 8A-8B and FIGS. 9A-9B. As further shown in FIG. 1, while unclamped, the larger gap is determined by the arc length of the handle bar clamp arm 115 (e.g., the arc length of the handle bar clamp arm when viewed from a side profile and relative to the circumference of a handle diameter, for example, as shown in FIG. 2). More specifically, the larger gap is approximately equal to the arc length described above minus the full circumference of the handle bar diameter and the gap created when the stem 100 is in a clamped state as shown below in FIG. 10B. In this manner, a handle bar may be easily inserted into the handle bar hole 110, without a need for a user to apply strength, force, or an additional tool to pry handle bar clamp arm 115 open. Due to the unique shape of many handle bars, it is often difficult to insert prior art stems. Using the disclosures described herein, even unique handle bars may more easily be installed thanks to the varying radii of the unclamped handle bar hole 110 and other aspects of the disclosure. After a handle bar is inserted into the handle bar hole 110, bolts (not shown in FIG. 1) may be inserted into the handle bar clamp slotted bolt holes 130 and the corresponding handle bar clamp threaded bolt holes 135. As the bolts are tightened, due to the flexibility of the material and the arrangement of the slots in the slotted bolt holes 130, the diameter and radii of the handle bar clamp hole 110 will change (i.e., be reduced) to fit the handle bar as the bolts are tightened and the handle bar clamp arm 115 engages the handle bar such that a tight fit is created with no gap between the interface of the stem and the handle bar. While bolts are discussed as exemplary here, other means for fastening are within the scope of this disclosure, e.g., screws, adhesives, nails, anchors, rivets, clamps, vices, and so forth.

The stem may further be attached to a vehicle frame via vehicle frame hole 120 that is defined by a first and second arm segment. Similar to the installation of handle bar, the vehicle frame (not shown) is inserted into the stem through the vehicle frame hole 120, where the vehicle frame hole 120 has a slightly larger diameter than the vehicle frame. Once the vehicle frame is inserted into a desired or optimal position, due to the flexibility of the first and second arm segments defining the vehicle frame hole 120, bolts or other fasteners may be used to clamp and affix the stem to the vehicle frame via vehicle frame clamp holes 140. Because it is typically easier to install stems onto vehicle frames, in many cases it is typically not necessary to use varying or continuously variable radii for the vehicle frame hole 120. However, this disclosure contemplates using varying radii and slotted bolt (e.g. fastener) holes for the vehicle frame hole 120 and the vehicle frame holes 140. Chamfers 139, for example as shown in FIG. 1, are dimensioned to allow the handle bar hole 110 to better engage the handle bar (not shown) when the vehicle stem 100 is clamped, such that the handle bar is not damaged or scratched when the vehicle stem 100 is clamped after the handle bar is inserted.

While a bicycle is used throughout this disclosure as exemplary, other vehicles or devices fall within the scope of this disclosure, including motorcycles or other devices that require installation of a handle bar for controlling components or steering of a vehicle, e.g., a scooter. The vehicle stem 100 may be made of any suitable material, preferably a strong and lightweight metal such as Titanium. While Titanium is preferred, other materials or alloys are contemplated by this disclosure, including aluminum and stainless steel. When the stem is fully clamped to the handle bar (not shown), the final diameter of the handle bar hole 110 should be sufficient to tightly fit to the handle bar to prevent slipping of the handle bar during operation of the vehicle. In some embodiments, the final clamped diameter of the handle bar hole 110 is fit to an industry standard handle bar diameter, for example, approximately 35mm or approximately 31.8 mm. Importantly, when the vehicle stem 110 is not clamped to the handle bar, the radius of the handle bar hole 110 should vary as described further below.

Figure 2 above depicts a side view of an exemplary improved vehicle stem, for example, vehicle stem 100, according to various aspects of the present disclosure. As shown above, the handle bar hole 110, when unclamped (e.g., when the handle bar clamp arm 115 is not tighetned or engaged with a handle bar), has varying radii. In this manner, a handle bar may easily be inserted into the handle bar 110 without the need for a user to pry open the handle bar clamp arms of the stem using additional strength, force, or a specialized tool. After a handle bar is inserted, when bolts (or other fasteners) are inserted and tightened, the clamp arm 115 may be urged towards the handle bar (not shown), and handle bar hole 110, defined by the clamp arm 115, fits tightly to the inserted handle bar. As explained above, the vehicle stem 100 may also be easily installed to a bicycle frame via the bicycle frame hole 120, and fastened via vehicle frame clamp holes 140.

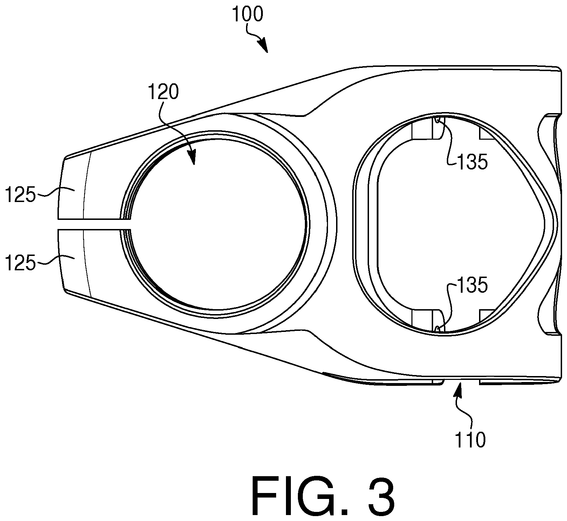

FIG. 3 depicts a top view of an exemplary improved vehicle stem, according to various aspects of the present disclosure. As shown in Figure 3, the vehicle stem 100 includes vehicle frame hole 120, vehicle frame clamp arms 125, the handle bar hole 110, and the handle bar clamp threaded bolt holes 135. Once the vehicle frame is inserted into the vehicle frame hole 120, a bolt or other fastener situated in the vehicle frame clamp holes 140 may be tightened. This causes the vehicle frame clamp arms 125 to come together and secure the vehicle frame to the vehicle stem 100 via the vehicle frame hole 120.

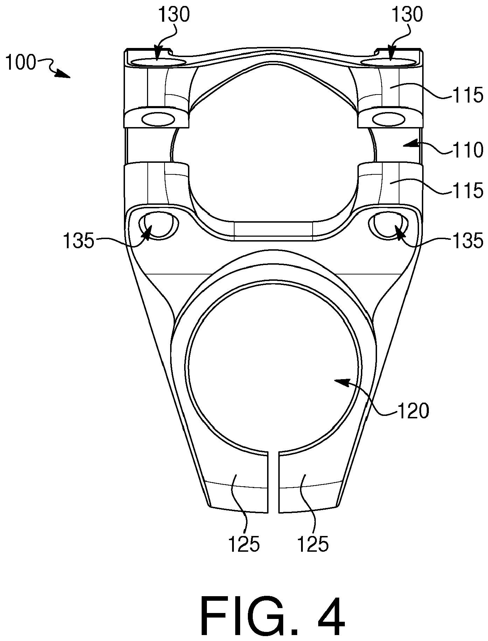

FIG. 4 depicts a bottom view of the exemplary improved vehicle stem 100, according to various aspects of the present disclosure. As shown in FIG. 4, the vehicle stem 100 includes vehicle frame hole 120, vehicle frame clamp arms 125, handle bar hole 110, handle bar clamp arm 115, handle bar clamp slotted bolt holes 130, and handle bar clamp threaded bolt holes 135. As explained above with respect to FIG. 1, the vehicle frame hole 120 is, according to some aspects, substantially similar to the diameter of the vehicle frame (not shown), such that urging the vehicle frame clamp arms 125 together after insertion of the vehicle frame results in a tight fit between the vehicle frame clamp arms 125 and the vehicle frame sufficient to prevent slipping or movement of the vehicle frame relative to the vehicle stem 100.

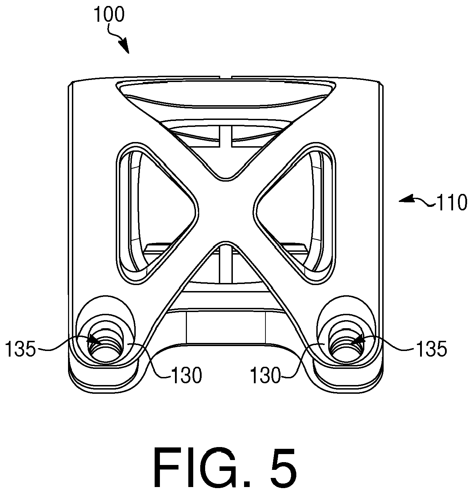

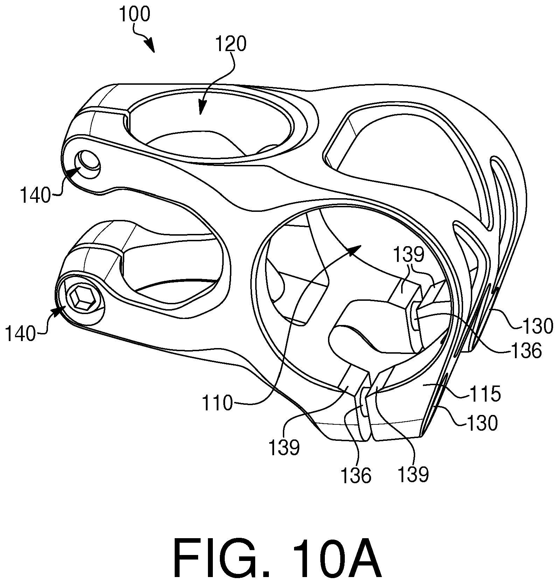

FIG. 5 depicts a front view of an exemplary improved vehicle stem 100, according to various aspects of the present disclosure. As shown in Figure 5, the vehicle stem 100 includes handle bar hole 110, handle bar clamp slotted bolt holes 130, and handle bar clamp threaded bolt holes 135. The dimensions of the handle bar clamp threaded bolt holes 134 and the handle bar clamp slotted bolt holes 130 are described further below with respect to FIGS. 10A-C.

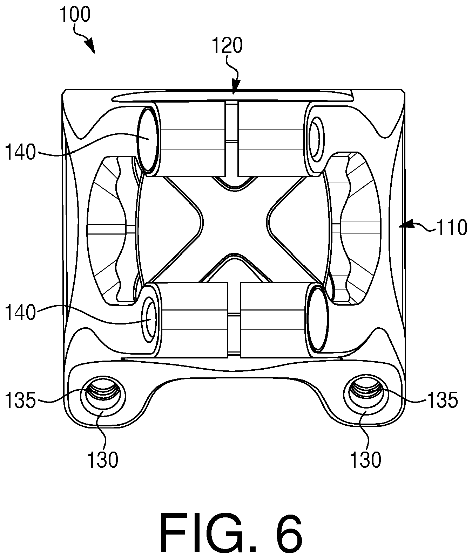

FIG. 6 depicts a rear view of an exemplary improved vehicle stem 100, according to various aspects of the present disclosure. As shown in FIG. 6, the vehicle stem 100 includes handle bar hole 110, handle bar clamp slotted bolt holes 130, handle bar clamp threaded bolt holes 135, vehicle frame hole 120, and vehicle frame clamp holes 140. As explained above, according to aspects of the disclosure, vehicle stem 100 is designed to reduce the weight of the stem where possible while still maintaining a connection between the handle bar and the vehicle frame sufficient to prevent slipping or loss in performance of the vehicle.

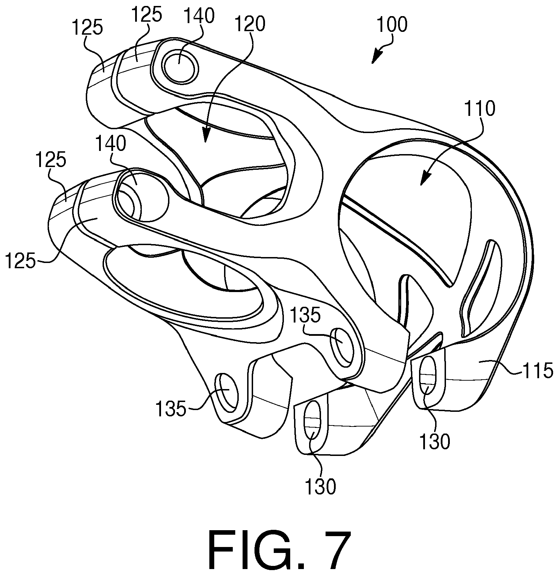

FIG. 7 depicts a bottom perspective view of an exemplary improved vehicle stem 100, according to various aspects of the present disclosure. As shown in FIG. 7, the vehicle stem 100 comprises handle bar hole 110, handle bar clamp arm 115, handle bar clamp slotted bolt holes 130, handle bar clamp threaded bolt holes 135, vehicle frame hole 120, vehicle frame clamp arms 125, and vehicle frame clamp holes 140.

FIG. 8A depicts an additional side view of an exemplary improved vehicle stem 100 including the varying radii, according to various aspects of the present disclosure. As explained above, the stem is depicted in FIGS. 1-7 in an unclamped state (e.g., when no bolts or fasteners have been tightened or exert pressure on the handle bar clamp arm 115). While in this unclamped state, the radii of the handle bar hole 110 varies along different portions. For example, as shown above in FIG. 8A, the handle bar hole 110 may have 4 constant radii, R1, R2, R3, and R4. According to some aspects, radii R1 and/or R3 may be approximately equal to the radius of the handle bar, which in some cases will be a radius corresponding to a diameter of an industry standard handle bar, which according to some aspects may be a diameter of approximately 32mm or approximately 35mm. In some embodiments, radii R2 and R4 may have radii that are different from the radius of the handle bar for which the vehicle stem 100 is designed to attach. According to some aspects of the disclosure, the vehicle stem 100 may be attached to a handle bar with varying radii. The radii may be measured relative to a center point C, which may be the center point of a longitudinal axis of the handle bar when it is inserted into the handle bar hole 110 of the stem 100. According to some aspects, the center point C is the center point only for R1, and the center point C may also vary for each of radii R2, R3, and R4. According to some aspects, radii R2 and R4 are different from radii R1 and R3. Preferably, one or more radii of the handle bar hole 110 should be greater than the radius of the handle bar. For example, in some embodiments, the radii is larger at the sections of the stem that may experience the most deflection. For example, radii R2 and R4 in some embodiments may experience the most deflection when the handle bar clamps 115 are clamped onto a handle bar. Accordingly, in some embodiments, radii R2 and R4 may be greater than radii R1 and R3. In some embodiments, for example for a 35mm handle bar configuration, radii R1 and R3 may be approximately equal to, 17.5mm (e.g., an approximate radius a handle bar with a 35mm diameter). Radius R2, which may experience deflection when handle bar clamps 115 are clamped, may be approximately equal to 20mm, which is significantly larger than radii R1 and R3. Similarly, radius R4 may also be manufactured to be approximately equal to 18mm, a value less than radius R2 but greater than radii R1 and R3. The dimensions here are exemplary, and other dimensions for radii R1, R2, R3, and R4 are within the scope of this disclosure. The varying radii is further achieved via manufacturing techniques. By modifying the handle bar clamp arm 115 geometry, the deflection of the handle bar clamp arm 115 can be modified at different portions of the arc length such that the unclamped state of the vehicle stem 100 results in a handle bar hole 110 that has the varying radii. While four radii R1-R4 are shown above, other configurations are contemplated. For example, in some embodiments, only 2 different radii are needed. In some embodiments, 5 or more different radii may be implemented. According to some aspects of the disclosure, where continuously variable radii are used, a near-infinite number of different radii may be implemented in the vehicle stem 100

According to some aspects of the disclosure, the handle bar hole 110 may have one or more portions with a continuously variable (e.g., non-constant) radius with a variable center point, as shown in FIG. 8B. In other words, a portion of the handle bar hole 110 may not be circular, but may instead follow one or more non-circular curve patterns, such as an oval. According to some aspects, the curvature of a portion of the handle bar hole 110 may be defined by radii increases determined according to the Fibonacci sequence. As shown in FIG. 8B, according to aspects of the disclosure, the handle bar hole 110 may have a first constant radius portion R-Constant (R_{c}) equal to the radius of a handle bar (not shown) to be inserted into the vehicle stem 100. The handle bar hole 110 may then have a second continuously variable radius portion R-Variable (Rᵥ), where the radius is different at each portion of the Rᵥ portion of the handle bar hole 110 defined by the handle bar clamp 115. For example, the R_{c} for the vehicle stem 100 may be equal to approximately to 17.63mm (e.g., an approximate radii with tolerance for a handle bar with a 35mm diameter). The Rᵥ may then be a radius greater than R_{c} that increases according to a pattern, for example, the Fibonacci sequence (Fₙ = Fₙ₋₁+Fₙ₋₂). For example, the Rᵥ may first increase by 0mm, 0.1mm, 0.1mm, 0.2mm, 0.3mm, 0.5mm, 0.8mm, 1.3mm, 2.1mm, and so forth. Accordingly, the radius of the handle bar portion Rᵥ may start at 17.5mm, but then increase to 17.6mm, 17.7mm, 17.9mm, 18.2mm, 18.7mm, 19.5mm, 20.8mm, 22.9mm, and so forth. While the Fibonacci sequence is described herein, any other patterns or calculations for increasing the radius are within the scope of this disclosure. For example, the Rᵥ may be increased continuously by a constant amount, for example, 0.2mm per increase. According to this example, Rᵥ may start at 17.5mm and then increased to 17.7mm, 27.9mm, 18.1mm, 18.3mm, and so forth over the length of the handle bar clamp arm 115 defining the handle bar hole 110.

As a result of the varying radii of the unclamped handle bar hole 110 described above according to one or more aspects, the unclamped resting state of the stem does not form a perfect circle, but instead, results in an opening or gap between the ends of the handle bar clamp arm 115, as further shown in FIGS. 8A-8B. This gap should be sufficiently sized to allow for easy insertion of a handle bar into the hole for installation. According to some aspects of the disclosure, the gap or opening in the unclamped state is sized to allow for easy installation of industry standard handle bars which typically may have diameters of 35mm or 31.8 mm. This is further advantageous over two piece clamp designs, which require additional bolts/fasteners and material to accommodate those bolts or fasteners. Further, according to some aspects, the gap in the unclamped state may be sufficiently sized such that in the clamped state, a non-zero gap exists when the vehicle stem 100 is in a clamped state, as shown with respect to FIGS. 10A-10B. The non-zero gap may provide advantages in some cases, because if there is no gap, the clamping load may not be fully transmitted to the handle bar.

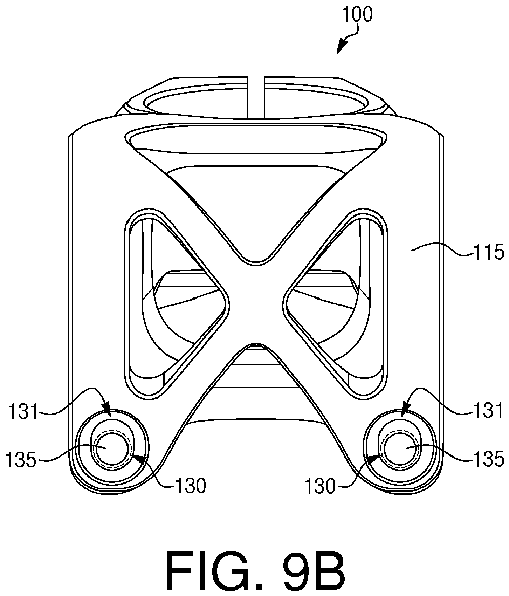

FIGS. 9A-9B depict front views of an exemplary improved vehicle stem including the handle bar clamp slotted bolt holes in a clamped and an unclamped position, according to various aspects of the present disclosure. Because of the varying radii of the handle bar hole 110 and the resulting gap as described above, a standard through hole is insufficient to clamp the handle bar hole 110 onto a handle bar with sufficient tightness. By implementing handle bar clamp slotted bolt holes 130, for example as shown above with respect to FIGS. 9A-9B, a bolt or fastener can be used to secure the handle bar clamp arm 115 upon tightening, such that in a clamped state, the handle bar hole 110 forms a tight fit with the handle bar (not shown) sufficient to prevent slipping when the handle bar is operated. More specifically handle bar clamp slotted bolt holes 130 are dimensioned so that the bolt can be inserted along the axis of the handle bar clamp threaded bolt holes 135 without interfering with the clearance hole when the arms are unclamped as well as provide a seat for the bolt without interference when clamped. The slots 131 of the handle bar clamp threated bolt holes 135 provide clearance for a bolt or fastener (not shown) in both clamped and unclamped states of the vehicle stem 100 as the intersection of the projected axis of the handle bar clamp threated bolt holes 135 and the clamp arm 115 changes when tightening down the fastener or bolt and the clamp arm 115 engages the handle bar. Varying angles and dimensions for the slot are contemplated, for example, as shown in FIG. 9A (unclamped state) and FIG. 9B (clamped state).

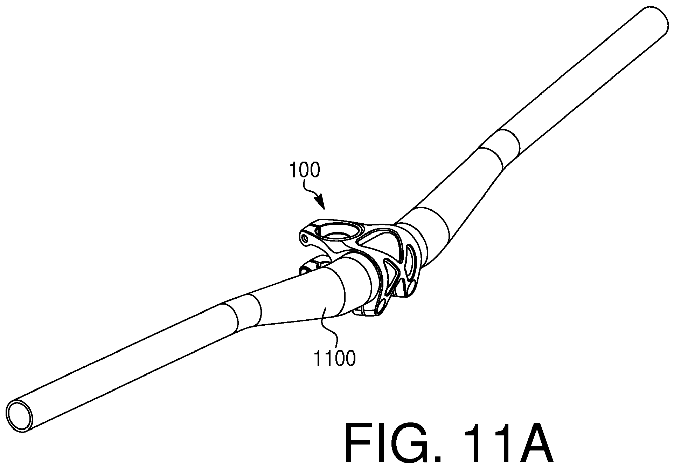

FIGS. 10A-10C above depict various views of the vehicle stem 100 in a clamped position e.g., after a handle bar has been inserted and the handle bar clamp arm 115 has been urged together to fully engage with a handle bar 1100 (not shown here but shown in FIGS. 11A-11B). In this state, one of the radii of the handle bar hole 110 may be substantially equal to the radius of the handle bar such that the handle bar clamp arm 115 conforms to and/or substantially wraps around or engages the handle bar, such that a sufficiently tight fit is achieved and the handle bar does not slip relative to the vehicle stem 100 when the handle bar is operated by a user after clamping.

FIG. 10A depicts a top perspective view of the vehicle stem 100 in a clamped position or state. As shown in FIG. 10A, handle bar clamp bolts 136 have been inserted into the handle bar clamp slotted bolt holes 130 and the handle bar clamp threaded bolt holes 135 (not shown), resulting in the handle bar clamp arm 115 being urged into a clamped position. In this manner, the radius of the handle bar hole 110 is reduced to fit with a middle portion of a handle bar, for example, handle bar 1100 described further below. A sufficiently tight fit is created such that the handle bar 1100 does not slip or move relative to the vehicle stem 110. FIG.10A also depicts chamfers 139, which help prevent scratching or damage to the handle bar when the vehicle stem 100 is clamped onto the handle bar during installation.

FIG. 10B depicts a side view of the vehicle stem 100 shown in FIG. 10A in a clamped position. As can be seen, the radius of the handle bar hole 110 is changed to be substantially similar to the radius of the handle bar 1100 (not shown). According to this aspect, as shown in FIG. 10B, a portion of each handle bar clamp bolt 136 is visible due to a small gap present as annotated in FIG. 10B. The presence of this gap may ensure that the clamping load is present on the handle bar (not shown), which helps prevent slipping between the handle bar and the vehicle stem 100 when clamped. According to other aspects, the handle bar clamp arm 115 may be tightened further such that the handle bar clamp bolt 136 is not visible due to contact of the surfaces of the handle bar clamp arm 115. FIG. 10B is also shown with vehicle frame clamp bolts 146, which may be inserted to tighten or install the vehicle stem 100 onto a vehicle frame (not shown) as described above.

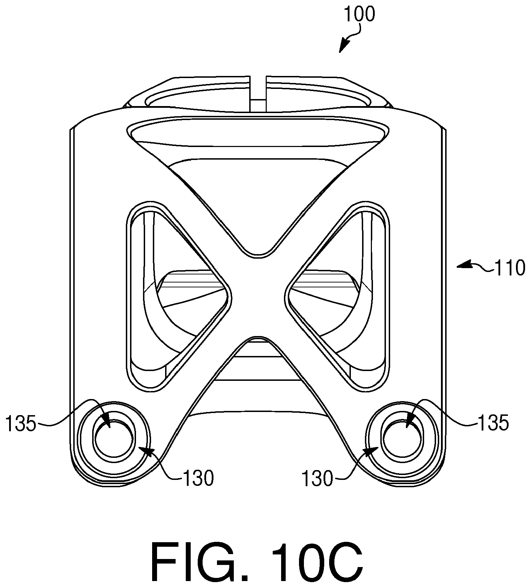

FIG. 10C depicts a front view of the vehicle stem 100 shown in FIG. 10A, with the handle bar clamp bolts 136 removed. As can be seen, in the clamped position, the handle bar clamp threaded bolt holes 135 and the handle bar clamp slotted bolt holts 130 align in the clamped position to allow the handle bar clamp bolts 136 (not shown) to provide a sufficiently tight fit of the handle bar hole 110 around the handle bar 1100 (not shown). In this manner, handle bar clamp bolts 136 may be easily inserted into the handle bar clamp slotted bolt holes 130 and the handle bar clamp threaded bolt holes 135 and tightened to clamp the stem onto the handle bar 1100.

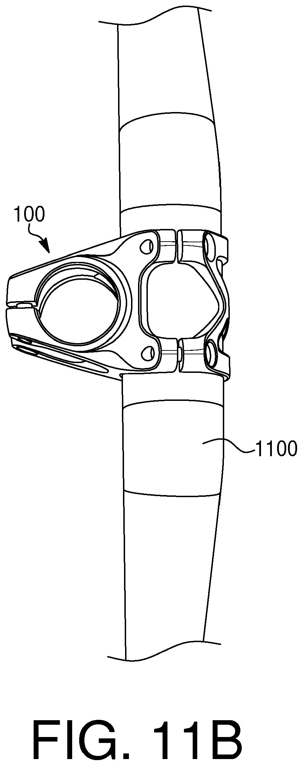

FIGS. 11A-11B depict an exemplary vehicle stem 100 in a clamped position with an exemplary handle bar 1100 installed as shown. FIG. 11A depicts the vehicle stem 100 from a top perspective view with the handle bar 1100 inserted in the vehicle handle bar hole 120 (not shown). Once installed and the handle bar 1100 is clamped into the handle bar hole 110, the fit between the handle bar 1100 and the handle bar hole 110 of the vehicle stem 100 should be sufficiently tight to prevent slipping or movement of the handle bar 1100 relative to the vehicle stem 100. FIG. 11B depicts a bottom view of the vehicle stem 100 and a middle portion of the handle bar 1100 inserted therein. As explained above, the radius of the middle portion of the handle bar 1100 should be substantially similar to the handle bar vehicle hole 120 of the vehicle stem 100 in order to ensure a tight fit sufficient to prevent movement and slipping of the handle bar 1100 relative to the vehicle stem 100.

The many features and advantages of the present disclosure are apparent from the detailed specification, and thus, it is intended by the appended claims to cover all such features and advantages of the present disclosure that fall within the true spirit and scope of the disclosure. Further, since numerous modifications and variations will readily occur to those skilled in the art, it is not desired to limit the present disclosure to the exact construction and operation illustrated and described, and accordingly, all suitable modifications and equivalents may be resorted to, falling within the scope of the present disclosure.

Moreover, those skilled in the art will appreciate that the conception upon which this disclosure is based may readily be used as a basis for designing other structures, methods, and systems for carrying out the several purposes of the present disclosure. Accordingly, the claims are not to be considered as limited by the foregoing description.

## Claims

1. A vehicle stem configured to secure a handle bar to a frame of a vehicle, the vehicle stem comprising:
a first and second arm segment defining a vehicle frame hole, wherein the first arm segment is positioned above the second arm segment;
a handle bar clamp arm positioned adjacent to the first and second arm segment, wherein a curvature of the handle bar clamp arm defines a handle bar hole and wherein the handle bar hole is oriented perpendicular to the vehicle frame hole;
wherein a first distal end of the first arm segment comprises a first set of vehicle frame clamp holes and wherein a second distal end of the second arm segment comprises a second set of vehicle frame clamp holes;
wherein a first distal end of the handle bar clamp arm comprises a set of slotted fastener holes that are separated by a gap from a set of threaded fastener holes positioned on a second distal end of the handle bar clamp arm.

2. The vehicle stem of claim 1, wherein the vehicle stem is composed of a flexible material that is configured to enable manipulation of the handle bar clamp arm to secure the handle bar within the handle bar hole.

3. The vehicle stem of claim 1, wherein a size of the gap in an unclamped state of the vehicle stem is larger than the size of the gap in a clamped state of the vehicle stem and wherein the size of the gap is determined by an arc length of the handle bar clamp arm.

4. The vehicle stem of claim 1, wherein a geometry of the curvature of the handle bar clamp arm defines a plurality of varying radii of the handle bar hole with respect to a center point of the handle bar hole.

5. The vehicle stem of claim 1, wherein the set of slotted fastener holes and the set of threaded fastener holes are configured to receive a set of handle bar clamp fasteners.

6. The vehicle stem of claim 1, wherein the first set of vehicle frame holes is configured to receive a first set of vehicle frame fasteners and wherein the second set of vehicle frame holes is configured to receive a second set of vehicle frame fasteners.

7. The vehicle stem of claim 1, wherein a first set of surfaces of the first distal end of the handle bar clamp arm and wherein a second set of surfaces of the second distal end of the handle bar clamp arm are chamfered.

8. A vehicle, comprising:
a handle bar secured to a frame of the vehicle by a vehicle stem;
wherein a portion of the frame traverses through a vehicle frame hole defined by a first and second arm segment of the vehicle stem;
wherein the handle bar is positioned through a handle bar hole that is defined by a curvature of a handle bar clamp arm of the vehicle stem;
wherein a first set of vehicle frame fasteners are fastened through a first set of vehicle frame clamp holes positioned on a first distal end of the first arm segment and wherein a second set of vehicle frame fasteners are fastened through a second set of vehicle frame clamp holes positioned on a second distal end of the second arm segment;
wherein a set of handle bar clamp fasteners are fastened through: a set of slotted fastener holes positioned at a first distal end of the handle bar clamp arm and a set of threaded fastener holes positioned at a second distal end of the handle bar clamp arm.

9. The vehicle of claim 8, wherein the vehicle is a bicycle or a motorcycle.

10. The vehicle of claim 8, wherein the vehicle stem is affixed to the handle bar at a middle section of the handle bar and wherein a radius of the handle bar at the middle section is equivalent to a radius of the handle bar hole.

11. The vehicle of claim 8, wherein a first set of surfaces of the first distal end of the handle bar clamp arm and wherein a second set of surfaces of the second distal end of the handle bar clamp arm are chamfered.

12. A method of securing a handle bar to a frame of a vehicle, the method comprising:
inserting a handle bar through a handle bar hole of the vehicle stem as defined by a curvature of a handle bar clamp arm;
inserting a set of handle bar clamp fasteners through a set of slotted fastener holes positioned at a first distal end of the handle bar clamp arm and a set of threaded fastener holes positioned at a second distal end of the handle bar clamp arm;
tightening the set of handle bar clamp fasteners until a diameter and radii of the handle bar hole is reduced to fit the handle bar;
inserting a portion of the frame through a vehicle frame hole of the vehicle stem as defined by a first and second arm segment;
inserting a first set of vehicle frame fasteners through a first set of vehicle frame clamp holes positioned on a first distal end of the first arm segment and a second set of vehicle frame fasteners through a second set of vehicle frame clamp holes positioned on a second distal end of the second arm segment; and
tightening the first and second set of vehicle frame fasteners until a diameter and radii of the vehicle frame hole is reduced to fit the portion of the frame of the vehicle.

13. The method of claim 12, wherein the handle bar hole is oriented perpendicular to the vehicle frame hole.

14. The method of claim 12, wherein the inserting the handle bar comprises inserting the handle bar through the handle bar hole until a middle section of the handlebar is positioned in the handle bar hole.

15. The method of claim 12, wherein a first set of surfaces of the first distal end of the handle bar clamp arm and wherein a second set of surfaces of the second distal end of the handle bar clamp arm are chamfered.
